# EUROPÄISCHE PATENTSCHRIFT

(11) **EP 1 529 594 B1**
(45) Veröffentlichungstag und Bekanntmachung des Hinweises auf die Patenterteilung: **31.05.2006**
(21) Anmeldenummer: 04405651.3
(22) Anmeldetag: 20.10.2004
(51) Int. Cl.: B23Q 1/00, B23Q 16/08, B23H 7/26

(54) **Spanneinrichtung mit mindestens drei Zentrierzapfen an einem ersten Kupplungsorgan und korrespondierenden Nuten an einem zweiten Kupplungsorgan**
Clamping device with at least three centering lugs on a first coupling member and corresponding grooves on a second coupling member
Dispositif de fixation avec au moins trois dents de centrage sur un premier organe de fixation et des rainures correspondantes sur un deuxième organe

(30) Priorität: 06.11.2003 CH 19052003
(43) Veröffentlichungstag der Anmeldung: 11.05.2005
(73) Patentinhaber: Erowa AG, CH-5734 Reinach (CH)
(72) Erfinder: Greber, Erich, 6010 Kriens (CH)
(74) Vertreter: Rottmann, Maximilian

(56) Entgegenhaltungen:
- EP-A- 0 255 042
- EP-A- 0 897 776
- DE-C- 337 933
- US-A- 3 880 267

## Beschreibung

Die vorliegende Erfindung bezieht sich auf eine Spanneinrichtung nach dem Oberbegriff des Ansprunchs 1 (siehe, z.B., EP-0 897 776-A) mit einem ersten Kupplungsorgan und einem lösbar daran fixierbaren zweiten Kupplungsorgan, wobei das erste Kupplungsorgan mit mindestens drei zumindest teilweise konisch ausgebildeten Zentrierzapfen versehen ist, welche in am zweiten Kupplungsorgan korrespondierend angeordnete Nuten einzugreifen bestimmt sind, um die Lage des ersten Kupplungsorgans gegenüber dem zweiten Kupplungsorgan in X- und Y-Richtung sowie bezüglich der Winkellage um die Z-Achse festzulegen, und wobei beide Kupplungsorgane mit als Z-Referenz dienenden Auflageflächen versehen sind, welche beim Festspannen zusammenwirken und die Lage des zweiten Kupplungsorgans gegenüber dem ersten Kupplungsorgan im gespannten Zustand in Z-Richtung festlegen.

Derartige Spanneinrichtungen werden bevorzugt zum positionsdefinierten Aufspannen eines mit einem Werkstück bzw. mehrerer Werkstücke versehenen Kupplungsorgans im Arbeitsbereich einer Bearbeitungsmaschine eingesetzt. Das eine, das Werkstück tragende Kupplungsorgan wird üblicherweise als Werkstückträger oder Palette bezeichnet, während das andere, im Arbeitsbereich der Bearbeitungsmaschine fixierte Kupplungsorgan üblicherweise als Spannfutter bezeichnet wird.

Bei bekannten Spanneinrichtungen ist das eine Kupplungsorgan -Spannfutter- mit vier Zentrierzapfen versehen, welche je zwei konisch verlaufende Seitenflächen aufweisen. Das andere Kupplungsorgan -Werkstückträger- ist mit vier Nuten versehen, welche in der Lage und Form mit den Zentrierzapfen korrespondieren. Beim Festspannen des Werkstückträgers am Spannfutter dringen die Zentrierzapfen in die Nuten ein und richten den Werkstückträger gegenüber dem Spannfutter in X- und Y-Richtung sowie bezüglich der Winkellage um die Z-Achse aus. Ein grundsätzlicher Nachteil der derartigen Spanneinrichtungen anhaftet besteht darin, dass sich die Zentrierzapfen beim Festspannen in den Nuten Festsetzen bzw. Verklemmen können.

Aus der EP-A-0 255 042 ist eine Spannvorrichtung für ein Werkzeug an einer Werkzeugmaschine bekannt. Die Spannvorrichtung besteht im wesentlichen aus einem Spannfutter, einem Elektrodenhalter sowie einem in letzterem verankerbaren Zugbolzen.

In die Oberseite des Elektrodenhalters sind vier Nuten eingelassen, welche um jeweils 90° um die Z-Achse zueinander versetzt sind. In jede Flanke jeder Nut ist ein Einschnitt zur Bildung einer in Z-Richtung elastisch nachgiebigen Lippe eingeschnitten. Von der Unterseite des Spannfutters stehen vier Leisten vor, welche in Lage und Form mit den Nuten des Elektrodenhalters korrespondieren. In den Ecken des Spannfutters sind vier als Z-Referenz dienende Pfosten angeordnet. Beim Festspannen des Elektrodenhalters am Spannfutter legen sich die Leisten des Spannfutters an den elastisch nachgiebigen Lippen an und biegen diese in Z-Richtung axial einwärts, bis die als Z-Referenz dienenden Pfosten an Stützflächen des Werkzeughalters zur Anlage kommen, so dass die Z-Lage des Elektrodenhalters gegenüber dem Spannfutter bestimmt ist. Durch die sich an den Lippen anlegenden Leisten wird der Elektrodenhalter gegenüber dem Spannfutter beim Festspannen in X- und Y-Richtung sowie bezüglich der Winkellage um die Z-Achse positioniert.

Aus der US-A-3,380,267 ist eine durch zwei zylindrische Kupplungshälften gebildete Kupplung bekannt, welche mit je einem Zahnkranz versehen sind, dessen Zähne sich in axialer Richtung erstrecken. Die eine Kupplungshälfte besteht aus einem Werkstoff mit grösserer Elastizität als die andere Kupplungshälfte. Während die eine Kupplungshälfte mit herkömmlichen Zähnen versehen ist, weist die andere Kupplungshälfte zwischen den Zähnen Zahnlücken auf, in welche keine Zähne der anderen Kupplungshälfte eingreifen. Durch das Vorsehen solcher Zahnlücken werden die eine höhere Elastizität aufweisenden Zähne der einen Kupplungshälfte nur an ihrer einen Flanke belastet. Durch diese Ausbildung sollen die zwischen den beiden Kupplungshälften in Umfangsrichtung auftretenden Spannungen verringert werden, da sich die Zähne der einen Kupplungshälfte in die Zahnlücken hinein ausdehnen können. Eine derartige Kupplung eignet sich nicht zum präzisen Spannen einer Palette an einem Spannfutter, zumal das ganze System mehrfach überbestimmt ist. Zudem ist die Lage der einen gegenüber der anderen Kupplungshälfte in Z-Richtung, d.h. in axialer Richtung, nicht definiert.

In der EP-A-0 897 776 ist eine Kupplungsanordnung für eine Bearbeitungseinrichtung offenbart. Die Kupplungsanordnung besteht aus einem Palettenträger, an welchem eine als Werkstückträger dienende Palette drehfest fixiert werden kann. Die Palette ist vorzugsweise als Pendelpalette ausgebildet. Der Werkstückträger ist mit vier Zentriernocken versehen, welche in vier korrespondierend an der Palette angeordnete Führungskanäle eingreifen. Der jeweilige Zentriernocken kommt an dem jeweiligen Führungskanal beidseitig zur Anlage. Die genannten Führungskanäle dienen der X-Y-Orientierung der Palette. Zur Bestimmung der Lage in Z-Richtung ist der Palettenträger mit Auflageflächen versehen, an welchen sich die Palette beim Festspannen mit ihrer Unterseite anlegt. Hinter den Zentriernocken sind Einschnitte in dem Palettenträger angebracht, welche eine federelastische Nachgiebigkeit der Nocken beim Festspannen der Palette an dem Palettenträger ermöglichen.

Schliesslich ist in der DE-C-337 933 eine Kupplung zum Kuppeln von zwei Wellen offenbart. Dazu ist die eine Welle mit einem Stirnrad versehen, das einen Zahnkranz aufweist. Die andere Welle weist ein mit zylindrischen Bohrungen versehenes Zahnrad auf. Die zylindrischen Bohrungen des Zahnrads sind derart ausgebildet, dass beim Kuppeln der beiden Wellen jeweils zwei Zähne des Stirnrads in eine zylindrische Bohrung des Zahnrads eingreifen. Eine derartige Kupplung eignet sich ebenfalls nicht zum präzisen Spannen einer Palette an einem Spannfutter, zumal auch dieses System mehrfach überbestimmt ist und die axiale Lage des Stirnrads gegenüber dem Zahnrad beim Kuppeln nicht näher definiert ist.

Die Aufgabe der Erfindung besteht nun darin, die eingangs definierte Spanneinrichtung mit einem ersten Kupplungsorgan und einem lösbar daran fixierbaren zweiten Kupplungsorgan derart auszubilden, dass sie robust ist, hohe Kräfte aufnehmen kann und die Gefahr des Festsetzens bzw. Verklemmens der in die Nut eingreifenden Zentrierzapfen eliminiert ist, wobei das zweite Kupplungsorgan wiederholbar hochpräzise am ersten Kupplungsorgan festspannbar sein soll.

Diese Aufgabe wird durch die im Anspruch 1 in Kombination angeführten Merkmale gelöst.

Indem jeder Nut ein Zentrierzapfen zugeordnet ist und sich der jeweilige Zentrierzapfen nur an der einen Flanke einer Nut anlegt, so dass zwischen der anderen Flanke und dem jeweiligen Zentrierzapfen ein Spalt verbleibt, wird die Gefahr des Festsetzens und des Verklemmens der in die Nut eingreifenden Zentrierzapfen eliminiert. Durch die weiteren Merkmale, dass sich zumindest zwei in benachbarte Nuten eingreifende Zentrierzapfen jeweils an den Flanken, welche der jeweils benachbarten Nut zugewandt sind oder an den Flanken, welche der jeweils benachbarten Nut abgewandt sind, anlegen, wird die Lage des ersten Kupplungsorgans gegenüber dem zweiten Kupplungsorgan in X- und Y-Richtung sowie bezüglich der Winkellage um die Z-Achse festgelegt und eine Überbestimmung weitgehend vermieden, so dass das zweite Kupplungsorgan wiederholbar hochpräzise am ersten Kupplungsorgan festgespannt werden kann, obwohl sich der jeweilige Zentrierzapfen nur an der einen Flanke einer Nut anlegt.

Bevorzugte Ausführungsformen und Weiterbildungen des Erfindungsgegenstandes sind in den abhängigen Ansprüchen 2-10 umschrieben.

Im folgenden wird ein Ausführungsbeispiel der erfindungsgemässen Spanneinrichtung unter Bezugnahme auf die beiliegenden Zeichnungen näher erläutert. In den Zeichnungen zeigen:
- Fig. 1a: eine Draufsicht auf das erste Kupplungsorgan;
- Fig. 1b: eine Seitenansicht des ersten Kupplungsorgans
- Fig. 2a: eine Draufsicht auf das zweite Kupplungsorgan;
- Fig. 2b: eine Seitenansicht des zweiten Kupplungsorgans
- Fig. 3: eine Seitenansicht der beiden Kupplungsorgane im zusammenfügten Zustand;
- Fig. 4: einen vergrösserten Ausschnitt aus der Fig. 3, und
- Fig. 5: einen Querschnitt durch die beiden Kupplungsorgane im gespannten Zustand in einem Schnitt entlang der Linie B-B in der Fig. 3.

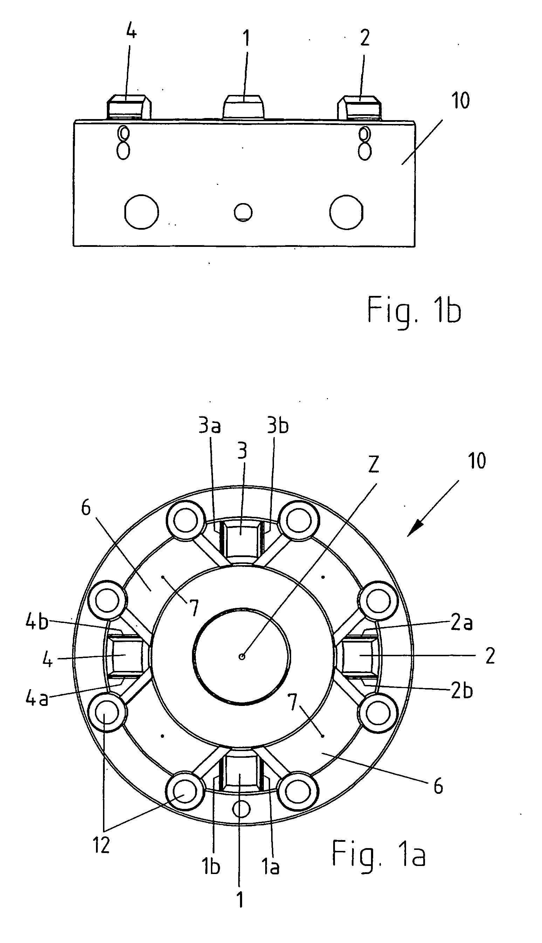

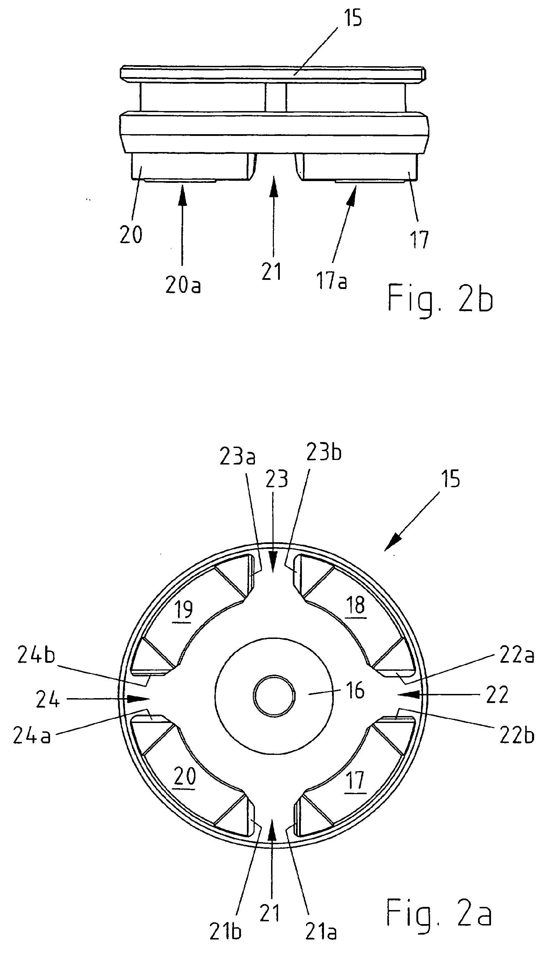

Die Fig. 1a zeigt das erste, im wesentlichen zylindrisch ausgebildete Kupplungsorgan 10 in einer Draufsicht und die Fig. 1b in einer Seitenansicht. Dieses erste Kupplungsorgan 10 wird üblicherweise ortsfest an der Bearbeitungsmaschine angebracht und dient als Spannfutter zum Festspannen des zweiten Kupplungsorgans 15, welches zur Aufnahme eines Werkzeugs, Werkstücks oder dergleichen vorgesehen ist und in den Fig. 2a und 2b dargestellt ist.

Von der Oberseite des ersten Kupplungsorgans 10 stehen vier Zentrierzapfen 1, 2, 3, 4 vor, die jeweils 90° um die Z-Achse Z zueinander versetzt angeordnet sind. Jeder Zentrierzapfen 1, 2, 3, 4 weist zwei konische Seitenflächen 1a, 1b; 2a, 2b; 3a, 3b; 4a, 4b auf. Zwischen zwei benachbarten Zentrierzapfen 1, 2; 2, 3; 3, 4; 4, 1 ist jeweils eine als Z-Referenz dienende Anschlagfläche 6 angeordnet, in deren Zentrum je eine Austrittsöffnung 7 zum Ausblasen von Luft angeordnet ist. Zum Befestigen des ersten Kupplungsorgans 10 ist dieses mit einer Vielzahl von Befestigungsbohrungen 12 versehen.

Das in den Fig. 2a und 2b dargestellte zweite Kupplungsorgan 15 dient der Aufnahme eines Werkzeugs, Werkstücks oder dergleichen. Es ist im wesentlichen ebenfalls zylindrisch ausgebildet und mit einer zentralen Ausnehmung 16 zur Aufnahme eines Spannzapfens (nicht dargestellt) versehen, mittels welchem es am ersten Kupplungsorgan 10 festspannbar ist. Von der Unterseite des zweiten Kupplungsorgans 15 stehen vier kreisringsegmentförmige Abschnitte 17, 18, 19, 20 vor, deren Stirnflächen eine als Z-Referenz dienende Auflagefläche 17a, 20a bilden, wie insbesondere aus der Fig. 2b ersichtlich ist. Diese Abschnitte 17, 18, 19, 20 begrenzen zwischen sich insgesamt vier Nuten 21, 22, 23, 24, welche in Form und Lage mit den Zentrierzapfen des ersten Kupplungsorgans korrespondieren. Die Flanken 21a, 21b; 22a, 22b; 23a, 23b; 24a, 24b der Nuten 21, 22, 23, 24 verlaufen konisch, wobei der obere Bereich der jeweiligen Flanke 21a, 21b; 22a, 22b; 23a, 23b; 24a, 24b unter einem flacheren Winkel verläuft als der nachfolgende Bereich. Von den beiden Flanken 21a, 21b; 22a, 22b; 23a, 23b; 24a, 24b einer Nut dient nur die eine Flanke 21a, 22b, 23a, 24b als Anschlagfläche für den jeweiligen Zentrierzapfen des ersten Kupplungsorgans wie nachfolgend noch näher erläutert wird. Der Winkel der Nut-Flanken ist jedenfalls auf denjenigen der Zentrierzapfen abgestimmt.

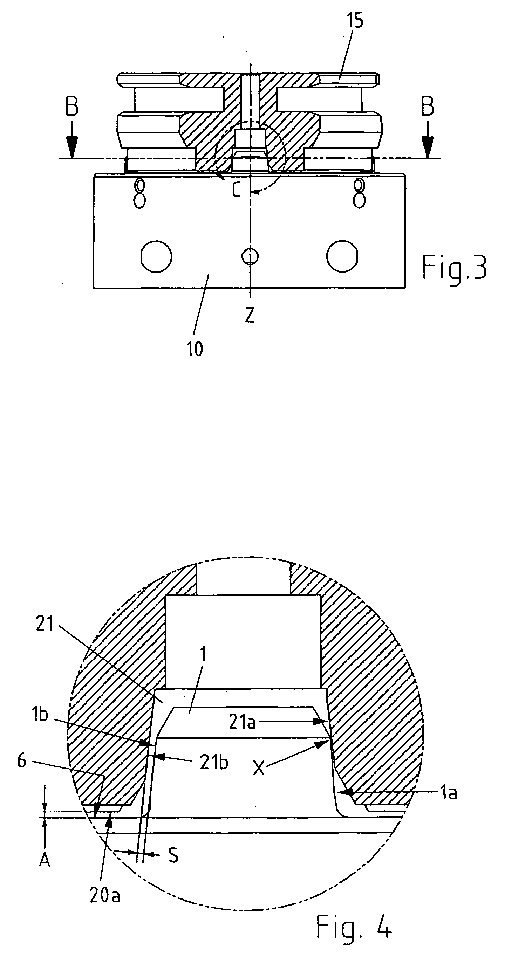

Die Fig. 3 zeigt eine Seitenansicht der beiden Kupplungsorgane 10, 15 im zusammengefügten aber noch nicht gespannten Zustand, wobei das zweite Kupplungsorgan 15 teilweise geschnitten dargestellt ist. Zusammengefügt heisst in diesem Fall, dass das zweite Kupplungsorgan 15 spannkraftfrei auf das erste Kupplungsorgan 10 aufgesetzt ist. Im zusammengefügten Zustand ist das zweite Kupplungsorgan 15 gegenüber dem ersten Kupplungsorgan 10 in X- und Y-Richtung sowie bezüglich der Winkellage um die Z-Achse Z positioniert. Lediglich eine Positionierung in Z-Richtung ist noch nicht erfolgt. Zum Festspannen des zweiten Kupplungsorgans 15 am ersten Kupplungsorgan 10 wird das zweite Kupplungsorgan 15 mittels des Spannbolzens (nicht eingezeichnet) an das erste Kupplungsorgan 10 herangezogen. Im geschnittenen Teil dieser Darstellung ist stellvertretend ein in eine Nut des zweiten Kupplungsorgans 15 eingreifender Zentrierzapfen eingezeichnet. Dieser einzelne, in die Nut 21 des zweiten Kupplungsorgans 15 eingreifende Zentrierzapfen 1 ist in der Fig. 4 in einer vergrösserten Ansicht dargestellt. Aus dieser vergrösserten Darstellung ist ersichtlich, dass sich der Zentrierzapfen 1 nur an der einen -rechten- Flanke 21a der Nut anlegt, während zwischen der anderen -linken- Flanke 21b der Nut 21 und dem Zentrierzapfen 1 ein Spalt S freibleibt. Diese Ausgestaltung kann dadurch erreicht werden, dass, ausgehend von einer symmetrischen Nut bzw. einem symmetrischen Zentrierzapfen, entweder an der eine Flanke der Nut oder an der eine Flanke des Zentrierzapfens etwas Material abgetragen wird.

Die rechte Flanke 1a des Zentrierzapfens 1 legt sich jedenfalls an die rechte Flanke 21a der Nut 21 an. Im hier gezeigten, spannkraftfreien Zustand besteht zwischen der jeweiligen Auflagefläche 20a des zweiten Kupplungsorgans 15 und der Anschlagfläche 6 des ersten Kupplungsorgans 10 ein Spalt A in der Grössenordnung von einigen Hundertstelmillimetern. Dieser Spalt A ist im vorliegenden Beispiel übertrieben gross dargestellt. Der Spalt A wird beim Festspannen unter Ausnutzung der Materialelastizität des Zentrierzapfens 1 und der Flanke 21a der Nut 21 aufgehoben. Beim Festspannen wird das zweite Kupplungsorgan 15 in Z-Richtung soweit gegen das erste Kupplungsorgan 10 gezogen, bis die Auflageflächen 20a des zweiten Kupplungsorgans 15 an den Anschlagflächen 6 des ersten Kupplungsorgans 10 anliegen, so dass nun auch die Positionierung des zweiten Kupplungsorgans 15 gegenüber dem ersten Kupplungsorgan 10 in Z-Richtung abgeschlossen ist. Indem das Verschieben des zweiten Kupplungsorgans 15 gegenüber dem ersten Kupplungsorgan 10, nach dem spannkraftfreien Zusammenfügen derselben, beim Festspannen in Z-Richtung, ausschliesslich unter Ausnutzung der Materialelastizität der Zentrierzapfen 1, 2, 3, 4 und der Flanke der jeweiligen Nut 21, 22, 23, 24 erfolgt, kann gänzlich auf in Z-Richtung federelastisch nachgiebige Mittel verzichtet werden.

Die Grösse der Auflagefläche, an der sich der jeweilige Zentrierzapfen 1, 2, 3, 4 an der zugehörigen Nutflanke anlegt, kann den Anforderungen entsprechend variiert werden.

Sollen über die Zentrierzapfen 1, 2, 3, 4 möglichst hohe Torsionskräfte übertragen werden können, so wird die Auflagefläche grösser gewählt, als wenn beispielsweise ein möglichst guter Selbstreinigungseffekt erzielt werden soll. Zum Erzielen eines guten Selbstreinigungseffekts sollte die Auflagefläche zwischen Zentrierzapfen und Nutflanke relativ klein gehalten werden. In diesem Zusammenhang wird zwischen linienförmiger, flächiger und formschlüssiger Auflage bzw. Auflagefläche unterschieden, wobei der Übergang zwischen Linie und Fläche bzw. zwischen Fläche und Formschluss bzw. zwischen Linie und Formschluss fliessend ist. Im vorliegenden Fall legt sich der Zentrierzapfen 1, im nicht gespannten Zustand der beiden Kupplungsorgane 10, 15, mit seinem vorderen Ende der konisch ausgebildeten Seitenfläche 1a linienförmig an der zugehörigen Nutflanke 21a an. Dies wird dadurch erreicht, dass der Winkel der zur Anlage an der Nutflanke 21a vorgesehenen, konisch ausgebildeten Seitenfläche 1a des Zentrierzapfens 1 um ca. 0.5° vom Winkel der korrespondierenden Nutflanke 21a abweicht. Der Bereich, an dem sich der Zentrierzapfen 1 linienförmig an der zugehörigen Nutflanke 21a anlegt ist mit X bezeichnet. Diese Linienberührung geht beim Festspannen durch die materialelastische Verformung des Zentrierzapfens 1, 2, 3, 4 bzw. der Flanke der jeweiligen Nut 21, 22, 23, 24 in eine Flächenberührung über.

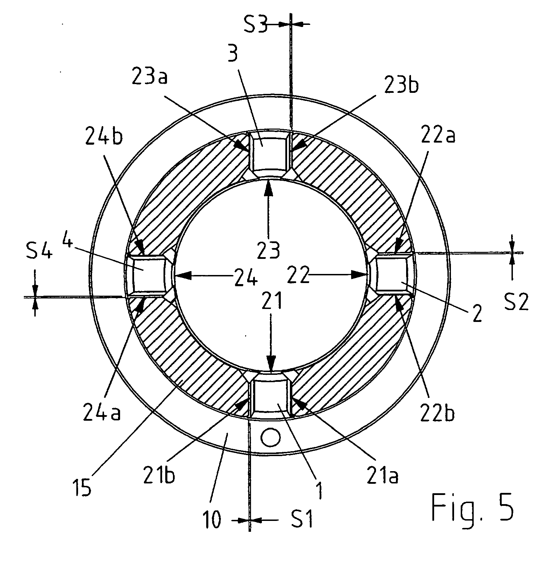

Die Fig. 5 zeigt einen Querschnitt durch die beiden Kupplungsorgane 10, 15 im gespannten Zustand in einem Schnitt entlang der Linie B-B in der Fig. 3. Der besseren Übersichtlichkeit wegen sind die Befestigungsbohrungen des ersten Kupplungsorgans 10 in dieser Darstellung weggelassen. Bei den nachfolgenden Erläuterungen wird von benachbarten Nuten bzw. Zentrierzapfen gesprochen. Als benachbart werden sowohl Nuten wie auch Zentrierzapfen bezeichnet, die in Umfangsrichtung aufeinanderfolgen. Beim Vorsehen von vier Nuten liegen einander nicht benachbarte Nuten diametral gegenüber. Von den vier Zentrierzapfen 1, 2, 3, 4 des ersten Kupplungsorgans 10 liegt der dem unteren Zeichnungsrand am nächsten liegende erste Zentrierzapfen 1 mit seiner rechten Flanke an der Flanke 21a der ersten Nut 21 an. Zwischen der linke Flanke des ersten Zentrierzapfens 1 und der linken Flanke 21b der ersten Nut 21 verbleibt ein Spalt S1. Der im Gegenuhrzeigersinn benachbarte zweite Zentrierzapfen 2 liegt auf der der benachbarten ersten Nut 21 zugewandten Seite an der Flanke 22b der zweiten Nut 22 an, während auf der der ersten Nut 21 abgewandten Seite ein Spalt S2 zwischen dem zweiten Zentrierzapfen 2 und der entsprechenden Nutflanke 22a besteht. Der nächste, im Gegenuhrzeigersinn benachbarte dritte Zentrierzapfen 3 liegt auf der der benachbarten zweiten Nut 22 zugewandten Seite nicht an der Flanke 23b der Nut 23 an -Spalt S3-, während er auf der zweiten Nut 22 abgewandten Seite an der entsprechenden Nutflanke 23a anliegt. Der wiederum nächste, im Gegenuhrzeigersinn benachbarte vierte Zentrierzapfen 4 liegt auf der der benachbarten dritten Nut 23 zugewandten Seite an der Flanke 24b der Nut 24 an, während er auf der dritten Nut abgewandten Seite nicht an der entsprechenden Flanke 24a der vierten Nut 24 anliegt -Spalt S4-.

Von den insgesamt acht Flanken 21a, 21b; 22a, 22b; 23a, 23b; 24a, 24b die an den vier Nuten 21, 22, 23, 24 ausgebildet sind, liegen die Zentrierzapfen 1, 2, 3, 4 an jeweils zwei Paaren von einander diametral gegenüberliegenden Flanken 21a, 23a; 22b, 24b an, während sie an den zwei weiteren Paaren von einander diametral gegenüberliegenden Flanken 21b, 23b; 22a, 24a nicht anliegen.

Auf jeden Fall muss sichergestellt werden, dass jeder Zentrierzapfen an der einen Flanke einer Nut anliegt, wobei zum Festlegen der Winkel-Position um die Z-Achse zumindest ein Zentrierzapfen, in Umfangsrichtung gesehen, an einer anderen Nutflanke anliegt als die Übrigen.

Indem sich der jeweilige Zentrierzapfen an der zugehörigen Nutflanke anlegt, eine hohe Spannkraft aufgebracht wird und grossflächigen Z-Auflagen vorgesehen sind, ist die Spanneinrichtung robust und kann hohe Kräfte in X-, Y- und Z-Richtung aufnehmen. Da der jeweilige Zentrierzapfen nur an der einen Nutflanke anliegt, ist sie ausserdem in Bezug auf Verschmutzung relativ unempfindlich.

Natürlich können auch bestehende Kupplungsorgane, bei denen die Zentrierzapfen beidseitig an den Flanken der jeweiligen Nut anliegen, erfindungsgemäss umgerüstet werden. Dazu braucht lediglich die eine Flanke der jeweiligen Nut bzw. des jeweiligen Zentrierzapfens in der vorgängig beschriebenen Art etwas ausgenommen bzw. abgetragen zu werden.

## Patentansprüche

1. Spanneinrichtung mit einem ersten Kupplungsorgan (10) und einem lösbar daran fixierbaren zweiten Kupplungsorgan (15), wobei das erste Kupplungsorgan (10) mit mindestens drei zumindest teilweise konisch ausgebildeten Zentrierzapfen (1, 2, 3, 4) versehen ist, welche in am zweiten Kupplungsorgan (15) korrespondierend angeordnete Nuten (21, 22, 23, 24) einzugreifen bestimmt sind, und wobei beide Kupplungsorgane (10, 15) mit als Z-Referenz dienenden Auflageflächen (6; 17a, 20a) versehen sind, welche beim Festspannen zusammenwirken und die Lage des zweiten Kupplungsorgans (15) gegenüber dem ersten Kupplungsorgan (10) im gespannten Zustand in Z-Richtung festlegen, und wobei jeder Nut (21, 22, 23, 24) ein Zentrierzapfen (1, 2, 3, 4) zugeordnet ist, **dadurch gekennzeichnet, dass** die Zentrierzapfen (1, 2, 3, 4) in Bezug auf die Nuten (21, 22, 23, 24) derart ausgebildet sind, dass sich der jeweilige Zentrierzapfen (1, 2, 3, 4) nur an der einen Flanke (21a, 22b, 23a, 24b) einer Nut (21, 22, 23, 24) anlegt, so dass zwischen der anderen Flanke (21b, 22a, 23b, 24a) und dem jeweiligen Zentrierzapfen (1, 2, 3, 4) ein Spalt (S1, S2, S3, S4) verbleibt, und wobei sich zumindest zwei in benachbarte Nuten (21, 22; 22, 23; 23, 24; 24, 21) eingreifende Zentrierzapfen (1, 2; 2, 3; 3, 4; 4, 1) jeweils an den Flanken (21a, 22b; 23a, 24b), welche der jeweils benachbarten Nut (21, 22; 23, 24) zugewandt sind oder an den Flanken (22b, 23a; 24b, 21a), welche der jeweils benachbarten Nut (22, 23; 24, 21) abgewandt sind, anlegen, so dass die Lage des ersten Kupplungsorgans (10) gegenüber dem zweiten Kupplungsorgan (15) in X- und Y-Richtung sowie bezüglich der Winkellage um die Z-Achse (Z) festgelegt ist.

2. Spanneinrichtung nach Anspruch 1, wobei das erste Kupplungsorgan (10) mit vier um jeweils 90° um die Z-Achse (Z) zueinander versetzen Zentrierzapfen (1, 2, 3, 4) und das zweite Kupplungsorgan (15) mit vier korrespondierend dazu angeordneten Nuten (21, 22, 23, 24) versehen ist.

3. Spanneinrichtung nach Anspruch 2, wobei sich einander gegenüberliegende Zentrierzapfen (1, 3; 2, 4) jeweils an den einander diametral gegenüberliegenden Flanken (21a, 23a; 22b, 24b) der einander gegenüberliegenden Nuten (21, 23; 22, 24) anlegen.

4. Spanneinrichtung nach einem der vorhergehenden Ansprüche, wobei der jeweilige Zentrierzapfen (1), im zusammengefügten aber nicht gespannten Zustand der beiden Kupplungsorgane (10, 15), linienförmig an der jeweiligen Nutflanke (21a) anliegt.

5. Spanneinrichtung nach Anspruch 4, wobei der jeweilige Zentrierzapfen (1) zumindest eine konisch ausgebildete Seitenfläche (1a) aufweist, welche zur Anlage an der korrespondierenden Flanke (21a) der jeweiligen Nut (21) vorgesehen ist, wobei der Winkel der zur Anlage an der jeweiligen Nutflanke (21a) vorgesehenen konischen Seitenfläche (1a) des jeweiligen Zentrierzapfens (1), um 0.2 bis 2° vom Winkel der korrespondierenden Nutflanke (21a) abweicht, so dass sich der Zentrierzapfen (1), im nicht gespannten Zustand der beiden Kupplungsorgane (10, 15), mit seinem vorderen Ende linienförmig an der zugehörigen Nutflanke (21a) anlegt.

6. Spanneinrichtung nach einem der vorhergehenden Ansprüche, wobei der Zentrierzapfen (1), im gespannten Zustand der beiden Kupplungsorgane (10, 15), flächenförmig an der jeweiligen Nut (21) anliegt.

7. Spanneinrichtung nach einem der vorhergehenden Ansprüche, wobei die beiden Kupplungsorgane (10, 15) derart aufeinander abgestimmt sind, dass im zusammengefügten aber nicht gespannten Zustand ein Spalt (A) zwischen den Z-Referenzflächen (6, 20a) der beiden Kupplungsorgane (10, 15) besteht, und dass dieser Spalt beim Festspannen unter Ausnutung der Materialelastizität der Zentrierzapfen (1) und/oder der Nutflanke (21a) aufgehoben wird, so dass im festgespannten Zustand die als Z-Referenz dienenden Auflageflächen (6, 20a) der beiden Kupplungsorgane (10, 15) aneinanderliegen.

8. Spanneinrichtung nach einem der vorhergehenden Ansprüche, wobei die Zentrierzapfen (1, 2, 3, 4) symmetrisch ausgebildet sind während die Nuten (21, 22, 23, 24) eine asymmetrische Form aufweisen.

9. Spanneinrichtung nach einem der vorhergehenden Ansprüche, wobei sich die als Z-Referenz dienenden Auflageflächen (6, 17a, 20a) im wesentlichen zwischen den Zentrierzapfen (1, 2, 3, 4) bzw. zwischen den Nuten (21, 22, 23, 24) des jeweiligen Kupplungsorgans (10, 15) erstrecken.

10. Spanneinrichtung nach einem der vorhergehenden Ansprüche, wobei die als Z-Referenz dienenden Auflageflächen (6, 17a, 20a) der beiden Kupplungsorgane (10, 15) im wesentlichen kreisringsegmentförmig ausgebildet sind.

## Claims

1. Clamping device having a first coupling member (10) and a second coupling member (15) which can be releasably fixed thereon, the first coupling member (10) being provided with at least three centring lugs (1, 2, 3, 4) which are of at least partly conical design and which are intended for engaging in grooves (21, 22, 23, 24) correspondingly arranged on the second coupling member (15), and both coupling members (10, 15) being provided with seating surfaces (6; 17a, 20a) which serve as Z reference and which interact during the clamping and fix the position of the second coupling member (15) in the Z direction relative to the fisrt coupling member (10) in the clamped state, and a centring lug (1, 2, 3, 4) being assigned to each groove (21, 22, 23, 24), **characterized in that** the centring lugs (1, 2, 3, 4), with respect to the grooves (21, 22, 23, 24), are designed in such a way that the respective centring lug (1, 2, 3, 4) bears only against the one flank (21a, 22b, 23a, 24b) of a groove (21, 22, 23, 24), so that a gap (S1, S2, S3, S4) remains between the other flank (21b, 22a, 23b, 24a) and the respective centring lug (1, 2, 3, 4), and at least two centering lugs (1, 2; 2, 3; 3, 4; 4, 1) which engage in adjacent grooves (21, 22; 22, 23; 23, 24; 24, 21) in each case bearing against the flanks (21a, 22b; 23a, 24b) which face the respectively adjacent groove (21, 22; 23, 24) or against the flanks (22b, 23a; 24b, 21a) which are remote from the respectively adjacent groove (22, 23; 24, 21), so that the position of the first coupling member (10) relative to the second coupling member (15) is fixed in the X and Y directions and also with regard to the angular position about the Z axis (Z).

2. Clamping device according to Claim 1, the first coupling member (10) being provided with four centring lugs (1, 2, 3, 4) offset from one another in each case by 90° about the Z axis (Z), and the second coupling member (15) being provided with grooves (21, 22, 23, 24) arranged in a corresponding manner thereto.

3. Clamping device according to Claim 2, centring lugs (1, 3; 2, 4) which are opposite one another in each case bearing against the diametrically opposite flanks (21a, 23a; 22b, 24b) of the grooves (21, 23; 22, 24) which are opposite one another.

4. Clamping device according to one of the preceding claims, the respective centring lug (1) bearing linearly against the respective groove flank (21a) in the state in which the two coupling members (10, 15) are joined together but not clamped.

5. Clamping device according to Claim 4, the respective centring lug (1) having at least one side face (1a) of conical design which is intended for bearing against the corresponding flank (21a) of the respective groove (21), the angle of the conical side face (1a), intended for bearing against the respective groove flank (21a), of the respective centring lug (1) deviating from the angle of the corresponding groove flank (21a) by 0.2 to 2°, so that the centring lug (1), in the state in which the two coupling members (10, 15) are not clamped, bears with its front end linearly against the associated groove flank (21a).

6. Clamping device according to one of the preceding claims, the centring lug (1) being in areal contact with the respective groove (21) in the clamped state of the two coupling members (10, 15).

7. Clamping device according to one of the preceding claims, the two coupling members (10, 15) being matched to one another in such a way that, in the state in which they are joined together but not clamped, there is a gap (A) between the Z reference surfaces (6, 20a) of the two coupling members (10, 15), and that this gap is removed during the clamping by utilizing the material elasticity of the centring lugs (1) and/or of the groove flank (21a), so that, in the clamped state, the seating surfaces (6, 20a), serving as Z reference, of the two coupling members (10, 15) bear against one another.

8. Clamping device according to one of the preceding claims, the centring lugs (1, 2, 3, 4) being of symmetrical design, whereas the grooves (21, 22, 23, 24) have an asymmetrical shape.

9. Clamping device according to one of the preceding claims, the seating surfaces (6, 17a, 20a) serving as Z reference extending essentially between the centring lugs (1, 2, 3, 4) or between the grooves (21, 22, 23, 24) and the respective coupling member (10, 15).

10. Clamping device according to one of the preceding claims, the seating surfaces (6, 17a, 20a), serving as Z reference, of the two coupling members (10, 15) being designed essentially in an annular segment shape.

## Revendications

1. Dispositif de serrage avec un premier organe d'accouplement (10), sur lequel peut être fixé de manière amovible un second organe d'accouplement (15), le premier organe d'accouplement (10) étant pourvu au moins de trois tourillons de centrage conçus partiellement coniques (1, 2, 3, 4) destinés à s'engrener dans des rainures (21, 22, 23, 24) disposées de manière correspondante sur le second organe d'accouplement (15), les deux organes d'accouplement (10, 15) étant pourvus de surfaces d'appui (6 ; 17a, 20a) servant de référence Z qui concourent lors du serrage et bloquent, en état serré, la position du second organe d'accouplement (15) par rapport au premier organe d'accouplement (10) dans la direction Z, à chacune des rainures (21, 22, 23, 24) étant associé un tourillon de centrage (1, 2, 3, 4), **caractérisé en ce que** les tourillons de centrage (1, 2, 3, 4) sont conçus par rapport aux rainures (21, 22, 23, 24) de manière à ce que le tourillon de centrage respectif (1, 2, 3, 4) ne s'appuie que sur un flanc (21a, 22b, 23a, 24b) d'une rainure (21, 22, 23, 24), de manière qu'entre l'autre flanc (21b, 22a, 23b, 24a) et le tourillon de centrage respectif (1, 2, 3, 4) demeurent une fente (S1, S2, S3, S4), au moins deux tourillons de centrage (1,2 ; 2,3 ; 3,4 ; 4,1), qui s'engrènent dans des rainures voisines (21, 22 ; 23 ; 23, 24 ; 24, 21) s'appuient sur les flancs (21a, 22b, 23a, 24b) tournés vers la rainure respectivement voisine (21, 22, 23, 24) ou sur les flancs (22b, 23a, 24b, 21 a) opposés à la rainure respectivement voisine, de manière que la position du premier organe d'accouplement (10) soit bloquée, par rapport au Second organe d'accouplement (15), dans les directions X et Y, ainsi que par rapport à la position relative autour de l'axe Z (Z).

2. Dispositif de serrage suivant la revendication 1, le premier organe d'accouplement (10) étant pourvu de quatre tourillons de centrage (1, 2, 3, 4) décalés les uns par rapport aux autres de respectivement 90° autour de l'axe Z (Z) et le second organe d'accouplement (15) étant pourvu de quatre rainures (21, 22, 23, 24) disposées de manière correspondante.

3. Dispositif de serrage suivant la revendication 2, les tourillons de centrage. (1 ,3 ; 2 ,4) opposés les uns aux autres s'appuyant respectivement sur les flancs diamétralement opposés (21a, 23a ; 22b, 24b) des rainures opposées (21, 23 ; 22, 24).

4. Dispositif de serrage suivant une des revendications précédentes, le tourillon de centrage (1) respectif s'appuyant de manière linéaire sur le flanc de la rainure respective (21a) en état assemblé mais non serré des deux organes d'accouplement (10, 15).

5. Dispositif de serrage suivant la revendication 4, le tourillon de centrage (1) respectif présentant au moins une surface latérale (1a) conçue conique destinée à s'appuyer sur le flanc correspondant (21a) de la rainure respective (21), l'angle de la surface latérale conique, destinée à s'appuyer sur le flanc de rainure (21a) respectif, du tourillon de centrage respectif (1) s'écartant de 0,2 à 2° de l'angle du flanc de rainure correspondant (21a), de manière qu'en état non serré, le tourillon de centrage (1), s'appuie, avec son extrémité avant, de manière linéaire sur le flanc de rainure (21a) associé.

6. Dispositif de serrage suivant une des revendications précédentes, le tourillon de centrage (1) s'appuyant de manière plane sur la rainure (21) respective en état serré des deux organes d'accouplement (10, 15).

7. Dispositif de serrage suivant une des revendications précédentes, les deux organes d'accouplement (10, 15) étant adaptés l'un à l'autre, de manière qu'en état assemblé mais non serré, une fente (A) demeure entre les surfaces de référence Z (6, 20a) des deux organes d'accouplement (10, 15), fente qui est supprimée lors du serrage, grâce à l'élasticité de la matière des tourillons de centrage (1) et/ou du flanc de rainure (21a), de manière qu'en état fixement serré, les surfaces d'appui (6, 20a) servant de référence Z des deux organes d'accouplement (10, 15) soient adjacentes l'une à l'autre.

8. Dispositif de serrage suivant une des revendications précédentes, les tourillons de centrage (1, 2, 3, 4) étant conçus symétriques, alors que les rainures (21, 22, 23, 24) présentent une forme asymétrique.

9. Dispositif de serrage suivant une des revendications précédentes, les surfaces d'appui (6, 17a, 20a) servant de référence Z s'étendant essentiellement entre les tourillons de centrage (1, 2, 3, 4), c'est-à-dire entre les rainures (21, 22, 23, 24) de l'organe d'accouplement respectif (10, 15).

10. Dispositif de serrage suivant une des revendications précédentes, les surfaces d'appui (6, 17a, 20a) servant de référence Z des deux organes d'accouplement (10, 15) étant conçues essentiellement en forme de segment d'anneau de cercle.
